# EUROPÄISCHE PATENTSCHRIFT

(11) **EP 4 124 000 B1**
(45) Veröffentlichungstag und Bekanntmachung des Hinweises auf die Patenterteilung: **03.07.2024**
(21) Anmeldenummer: 21187022.5
(22) Anmeldetag: 21.07.2021
(51) Int. Cl.: H04L 67/51, H04L 67/56, H04L 67/563

(54) **VERFAHREN, COMPUTERPROGRAMMPRODUKT SOWIE SYSTEM ZUR BEREITSTELLUNG VON DIENSTEN**
METHOD, COMPUTER PROGRAM PRODUCT AND SYSTEM FOR PROVIDING SERVICES
PROCÉDÉ, PRODUIT-PROGRAMME INFORMATIQUE, AINSI QUE SYSTÈME DE FOURNITURE DES SERVICES

(43) Veröffentlichungstag der Anmeldung: 25.01.2023
(73) Patentinhaber: Siemens Aktiengesellschaft, 80333 München (DE)
(72) Erfinder: Albrecht, Harald, 90475 Nürnberg (DE); Balduf, Jochen, 76707 Hambrücken (DE); Volkmann, Frank, 90475 Nürnberg (DE)
(74) Vertreter: Siemens Patent Attorneys

(56) Entgegenhaltungen:
- US-A1- 2017 111 476
- PROFANTER STEFAN ET AL: "OPC UA for plug & produce: Automatic device discovery using LDS-ME", 2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8, XP033292903, DOI: 10.1109/ETFA.2017.8247569 [gefunden am 2018-01-04]

## Beschreibung

Die vorliegende Erfindung betrifft ein Verfahren, ein Computerprogrammprodukt sowie ein System zur Bereitstellung von Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtualisierten Umgebungen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Mit der Industrial Edge können beispielsweise automatisierungstechnische Anwender einfach und modular die von ihnen gewünschten Funktionalitäten für ihre Automatisierung in Form sogenannter Apps (Applikationen) installieren, aktualisieren und erweitern. Einerseits profitieren Anwendern von zentralisierter und einfach skalierbarer Verwaltung auch vieler Industrial Edge-Geräte, andererseits vom Markt, der ebenfalls Drittanbieter dieser Applikationen umfasst. Ein wesentlicher weiterer Aspekt, ist der Wunsch der Automatisierungsanwender, Applikationen unterschiedlicher Anbieter möglichst ohne zusätzlichen Integrationsaufwand einfach installieren und sofort in Betrieb nehmen zu können.

Für einen semantisch hochwertigen und sicheren Datenaustausch hat sich in der Automatisierungstechnik OPC UA (OPC Unified Architecture, www.opcfoundation.org) etabliert. Applikations-Anbieter steigern die Attraktivität ihrer Apps, indem sie beispielsweise die von diesen berechneten Daten aus einer Produktionsdatenanalyse, Bildanalyse und dergleichen mehr, über einen integrierten OPC UA Server anderen Automatisierungsfunktionen bereitstellen. Gegenüber der klassischen Gerätewelt sind nun aber in das gleiche (Industrial Edge) Gerät nicht nur ein klassischer Geräte-OPC-Server zu integrieren, sondern mehrere Applikationen mit OPC UA Server Funktionalität von verschiedener (Dritt-) Anbieter.

Eine manuelle Integration wie in der bisherigen Einzelgerätewelt ist aufwändig und fehlerträchtig, teilweise aufgrund mangelnder Konfigurationspunkte in den OPC UA Servern sogar unmöglich. Diese Integration umfasst aber nicht nur die Applikationen im Gerät, sondern auch das Zusammenspiel Geräteexterner Anteile der Automatisierungs-Apps mit den Geräte-Apps.

Wird eine OPC UA Server-Applikation in einer Virtualisierungslösung wie beispielsweise einem (Docker) Container ausgeführt, dann ist die Applikation zunächst einmal frei in den von ihr belegten Netzwerkressourcen wie insbesondere TCP-Ports - hier ist insbesondere bei OPC UA der Port 4840 für einen einzelnen Server vordefiniert.

### Stefan Profanter et al. beschreiben in "OPC UA for Plug & Produce: Automatic Device Discovery using LDS-ME", 2017 22^{nd} IEEE International Conference on Emerging Technologies and Factory Automation (ETFA) XP033292903, eine solche Methode der einfachen Plug&Play Integration.

Anwender von mittels Containervirtualisierung oder vergleichbaren Virtualisierungskonzepten realisierten Steuerungsanwendungen für industrielle Automatisierungssysteme erwarten eine möglichst unkomplizierte Integration derartiger Anwendungen in ihre bestehende Infrastruktur. Je nach Netzwerkanbindung und verwendeter Ablaufsteuerungsumgebung treffen insbesondere OPC UA Server auf höchst unterschiedliche anwenderseitige Konfigurationen, die durch Entwickler von Steuerungsanwendungen bei automatisierten Konfigurationsverfahren für die Steuerungsanwendungen berücksichtigt werden müssen. Bei der Netzwerkanbindung stellen anwenderseitig knappe IP-Adress- und TCP-Portnummernbereiche besondere Herausforderungen im Rahmen der Integration von Steuerungsanwendungen in eine bestehende Infrastruktur dar.

Die OPC UA Server-Applikationen sind jedoch ohne weitere Maßnahmen nicht von außen erreichbar, so dass der Anwender die Server-Ports zwischen der App-Sicht und der Industrial Edge-Geräte-Sicht rangieren muss und dabei auf Port-Konflikte und das Einhalten möglicher Einschränkungen der Netzwerkumgebung achten muss - wie beispielsweise die begrenzte Menge der in Firewalls freischaltbaren Ports und deren konkrete Wertebereiche bzw. voreingestellte Standardregeln ohne weiteren (Konfigurations-) Aufwand verwenden kann.

Außerdem muss der automatisierungstechnische Anwender die anderen Anteile seiner Automatisierungsapplikation mit den Servern über die konkreten Netzwerkadressierungsinformationen verknüpfen.

### Stand der Technik

Die OPC Foundation beschreibt die Funktion des "Local Discovery Server" LDS, über den die OPC UA Server innerhalb eines direkt erreichbaren Netzwerksegments aufgefunden werden können, nachdem sich die OPC UA Server zuvor am LDS - über den sogenannten "Registerserver" Service - angemeldet haben. Bekannt ist die grundsätzliche Funktion eines OPC UA Proxy. Dieser agiert beispielsweise analog zu (Ingress) Web-Proxies, indem sie die auf einem gemeinsamen Netzwerkport eingehende Verbindungen anhand zusätzlicher Kriterien auf der Ebene der OPC UA-Applikationsschicht (aus Sicht des ISO/OSI-Schichtenmodells) weiterschalten.

Der Local Discovery Server LDS hält eine Liste von allen OPC UA Applikationen vor.

Bei Virtualisierungsumgebungen wie (Docker) Containern besteht das Problem, dass ein OPC UA Server sich nur mit seinen "inneren" Netzwerkinformationen (IP-Adresse / Hostname und Port) am Local Discovery Server LDS registrieren kann. Diese inneren Netzwerkinformationen sind dabei die für den Container selbst sichtbaren Netzwerkadressen und -ports, diese sind jedoch grundsätzlich von der Außenansicht auf Ebene eines Clusters oder eines Industrial Edge-Geräts verschieden.

In der Patentanmeldung mit dem Anmeldeaktenzeichen EP 20198692 A1 "Verfahren und System zur Bereitstellung von zeitkritischen Diensten mittels einer Ablaufsteuerungsumgebung" wird ein Mechanismus beschrieben, um die Registrierungsinformationen aus Apps mit OPC UA-Servern beispielsweise in einem Cloud-System über sogenannte "Sidecar"-Container zu erfassen und gemäß einer gewünschten Cluster-Ingress-Betriebsart aufzubereiten und den am Eintrittspunkt des Clusters betriebenen Load Balancer/Ingress-Einheiten zur Verfügung zu stellen.

Die ältere Patentanmeldung mit dem Anmeldeaktenzeichen EP 20193690.3 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In der oben zitierten Anmeldung werden keine technischen Fragen beim Verbindungsaufbau auf der Dienstebene von OPC UA geklärt.

Bestehende Diensterkennungsverfahren (service / device discovery), insbesondere für OPC UA, sind primär auf eine Ermittlung von Diensten ausgelegt, die mittels physikalischer oder virtueller, Hypervisor-basierte Maschinen zur Nutzung verfügbar gemacht werden. Insbesondere relativ hohe Betriebs- und Wartungskosten für Hypervisor-basierte virtuelle Maschinen machen Virtualisierungskonzepte mit geringerem Ressourcenbedarf, z. B. Containervirtualisierung, gegenüber einer vollständigen Systemvirtualisierung zunehmend attraktiv. Dies gilt auch für industrielle Automatisierungssysteme.

Entsprechend der OPC UA-Spezifikationen ist zwar der Local Discovery Server LDS für OPC-UA basierte Dienste vorgesehen. Allerdings können mittels entsprechender Erkennungsverfahren lediglich jeweils Hosts innerhalb einer Broadcast-Domäne aufgefunden werden. Außerdem wird eine Multicast-Kommunikation innerhalb von Systemen zur Containervirtualisierung üblicherweise blockiert.

### In der Druckschrift US 2017/0111476 A1 wird ebenfalls eine Möglichkeit vorgestellt, neue Ressourcen Plug&Play in ein bestehendes Netz einzubinden, mittels jeweils einer neu generierten API.

Der vorliegenden Erfindung liegt die Aufgabe zugrunde, ein Verfahren zur Bereitstellung von Diensten zu schaffen, das eine zuverlässige nutzerseitige Ermittlung von mittels Containervirtualisierung oder vergleichbarer Virtualisierungskonzepte bereitgestellten Diensten ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen, einem Computerprogrammprodukt mit den im Anspruch 9 angegebenen Merkmalen und durch ein System mit den im Anspruch 10 angegebenen Merkmalen gelöst.

Vorteilhafte Weiterbildungen sind in den abhängigen Ansprüchen wiedergegeben.

Beschrieben wird unter anderem ein Verfahren zur Bereitstellung von zeitkritischen Diensten mittels Ablaufsteuerungskomponenten in einer Ablaufsteuerungsumgebung an einen Dienstabnehmer umfasst folgende Schritte
- den Diensten wird jeweils zumindest eine Server-Komponente (UAS, 101) zugeordnet, die durch eine in die Ablaufsteuerungsumgebung ladbare und dort ausführbare Ablaufsteuerungskomponente gebildet wird,
- zumindest eine Proxy-Komponente eines die Ablaufsteuerungsumgebung umfassenden Teilnetzes nimmt Dienst-Anfragen an,
- eine zentrale Verzeichnisdienst-Komponente (LDS, 201) übermittelt die innerhalb des Teilnetzes gültigen Adressierungsinformationen an die Proxy-Komponente
- Registrierung der Server-Komponente (UAS, 101) an der zentralen Verzeichnisdienst-Komponente (LDS, 201) mit seinen inneren Verbindungsdaten (111)
- Ermittlung zu jeweils innerhalb des Teilnetzes gültigen Adressierungsinformationen der Server-Komponente (UAS, 101) zugeordnete global gültige Zugangsinformationen,
- Modifikation der inneren Verbindungsdaten (DiscoveryURI und/oder EndpointURI) mittels der ermittelten externen Netzwerk-Adressierungsinformationen (102) in der zentralen Verzeichnisdienst-Komponente (LDS, 201),
so dass die zumindest eine Proxy-Komponente (UAP, 200) Dienstanfragen entsprechend den modifizierten Adressierungsinformationen an die Server-Komponente (UAS, 101) weiterleiten kann.

Die hier offenbarte Erfindung präzisiert auf der Patentanmeldung EP20198692 A1 aufbauend die erforderliche Funktion der Load-Balancer/Ingress-Einheiten ("Proxies") für den Betrieb mit OPC UA und insbesondere den Betrieb der Endpunkt-Ermittlung von Einzelservern sowie den sogenannten OPC UA "secure sessions" auf Ebene 7 des ISO/OSI-Schichtenmodells.

Ablaufsteuerungskomponenten sind insbesondere Software-Container, die jeweils von anderen Software-Containern oder Container-Gruppen isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden.

Die Ablaufsteuerungsumgebung kann beispielsweise eine Docker Engine oder einen Snap Core umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Jeder Server-Komponente ist eine Verzeichnisdienst-Komponente zugeordnet, mittels der ein Local Discovery Service (Verzeichnisdienst-Komponente 201) realisiert wird. Ein solcher Ansatz ist in der älteren europäischen Patentanmeldung mit dem Anmeldeaktenzeichen EP 20193690.3, auf deren Offenbarungsgehalt hier Bezug genommen wird, detailliert beschrieben. In diesem Fall übermitteln die Verzeichnisdienst-Komponenten die innerhalb des Teilnetzes gültigen Adressierungsinformationen bzw. die lokal gültigen URLs über die Abgleich-Einheit an die Konfigurationseinheit und an die Aggregator-Komponente 104.

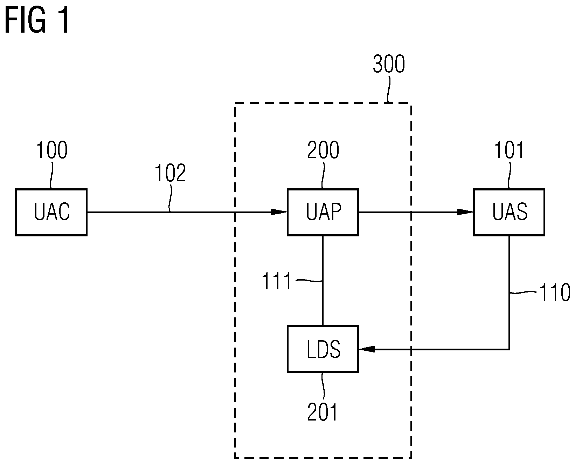

Die hier vorgeschlagene Lösung wird auch in der Figur 1 anhand eines Beispiels der Industrial Edge mit OPC UA Kommunikation dargestellt.

Vorgestellt wird ein Intelligenter Proxy für OPC UA Server in virtuelle Maschinen oder Docker Umgebungen, wie in der Industrial Edge, der in die zunächst noch ungesicherten Dienstekommunikation eingreift, um sicherzustellen, dass OPC UA Clients sich erfolgreich mit OPC UA Servern in einem Container-Host/Industrial Edge verbinden können.

Der vorgeschlagene Proxy-Komponente UAP, 200 mit Local Discovery Server Funktionalität LDS, 201 kann zeitgleich mehrere Probleme lösen.

Zum einen können OPC UA Clients UAC, 100 die auf einem einzelnen Netzwerkgerät - wie beispielsweise einer Industrial Edge / Container Host - installierte Vielzahl von OPC UA Servern UAS, 101 mittels des Local Discovery Server LDS, 201 auffinden.

Die OPC UA Server UAS, 101 sind über die Proxy-Komponente UAP, 200 und vorzugsweise über nur einen Port, wie dem well-known Port 4840, ansprechbar, was die Security Aspekte der Netzwerktopologie aus administrativer Sicht verbessert. Vorteilhaft ist weiterhin, dass die administrative Sicht der Netzwerkressourcen über die Proxy-Komponente (200) von der internen Server- bzw. Container-Sicht entkoppelt ist.

Für die erfindungsgemäße Lösung spielt es keine Rolle, ob die funktionalen Einheiten Proxy-Komponente UAP, 200 und die Verzeichnisdienst-Komponente, Local Discovery Server LDS, 201 dabei als eine Einheit oder als getrennte Einheiten (Prozesse, Programme, usw.) ausgestaltet sind. Wichtig ist hingegen der Informationsabgleich (111) zwischen Verzeichnisdienst-Komponente, Local Discovery Server LDS ,201 und Proxy-Komponente UAP, 200. Die vom LDS bereitgestellten Informationen 111 ermöglichen es erst der Proxy-Komponente UAP, 200 Verbindungsanforderungen von OPC UA Clients UAC, 100 korrekt weiterzuleiten und bestimmte, noch unverschlüsselten Teil (in der Regel der Beginn) der Kommunikation zur Diensteanforderung entweder eigenständig auf Basis von der bereitgestellten Information 111 zu beantworten oder alternativ die zugehörigen Diensteantworten (ACK) korrekt umzuschreiben.

In einer vorteilhaften Ausgestaltungsform kann ein Dienst in seinem Container jeweils eine eigene Verzeichnisdienst-Komponente LDS umfassen und die Registrierung der Server-Komponente (UAS, 101) erfolgt an der dem Dienst zugeordneten Verzeichnisdienst-Komponente (LDS) mit seinen inneren Verbindungsdaten (111).

Die gewünschte Gesamtfunktionalität wird dabei durch folgende Schritte erreicht:
1. Registrierung:
   Bei der Registrierung des Servers am Local Discovery Server LDS, 201 mit seinen inneren Verbindungsdaten, 110, (innere Host-Adressierungs-Information) werden dessen DiscoveryURI durch die (externen) Netzwerk-Adressierungsinformationen, 102 der (OPC UA) Proxy-Komponente s UAP, 200 ersetzt bzw. angepasst.

Hierbei wird der URI einer einzelnen Server-Instanz (101) beispielsweise durch angefügte individuelle URI Attribute eindeutig identifiziert.

Zum Beispiel:
<innere Verbindungsdaten>:Port/Pfad
<FQDN/Host-IP>:4840/Roboter,
<FQDN/Host-IP>:4840/Camera

Beim Verbindungsaufbau von einem UA Client UAC, 100 zu einer der (externen) Netzwerk-Adressierungsinformationen (Endpoint URIs), 102, beispielsweise per HEL(LO)-Nachricht gemäß OPC UA-Standard prüft die (OPC UA) Proxy-Komponente UAP, 200:
Adressiert der in der Verbindungsanfrage "HEL(LO)" spezifizierte Server "EndpointURI" den Local Discovery Server LDS, 201, wird die Verbindung an diesen weitergeleitet, so dass nachfolgende Diensteanfragen und -antworten vom Local Discovery Server LDS beantwortet werden.
Hierbei handelt es sich bei dem genannten Beispiel OPC UA im Regelfall um die OPC UA Dienste
"FindServers" oder
"FindServersOnNetwork".

Mit einer Diensteanfrage wird im Folgenden die gesamte Kommunikation (z. B. TCP IP Verbindung) bezeichnet, und nicht nur ein einzelner OPC UA Service Request.

Adressiert der in der Verbindungsanfrage "HEL(LO)" spezifizierte Server "EndpointURI" einen Server UAS, 101, wird dazu der entsprechende innere Server "EndpointURI" ermittelt und der Verbindungsaufbau mit dem inneren Server "EndpointURI" fortgesetzt.

Sofern nachfolgend ungesicherte Diensteanfragen und - antworten über diese Verbindung übertragen werden, greift die Proxy-Komponente gegebenenfalls gemäß nachfolgender Regel in diese Dienste ein:
Wenn sich eine von der Proxy-Komponente UAP, 200 an einen Dienste-Server UAS, 101 weitergeleitete Verbindung zunächst noch in der bestimmungsgemäß ungesicherten Betriebsart (d. h. ohne "secure session", unverschlüsselt) befindet, überwacht die Proxy-Komponente die Verbindung auf das Übertragen einer "GetEndpoints" Diensteanfrage. UA Clients UAC, 100 verwenden regelmäßig die "GetEndpoints" Diensteanfrage, um zwischen unter Umständen mehreren von Servern zugleich angebotenen Endpunkten auszuwählen. Da die UA Server UAS, 101 jedoch nur ihre internen Endpunkte kennen, nicht jedoch die Außenansicht mit die Proxy-Komponente UAP, 200, muss die Proxy-Komponente bei diesem Dienst eingreifen; hierbei existieren grundsätzlich mehrere, prinzipiell gleichwertige Ausführungsvarianten:
Die Proxy-Komponente leitet die "GetEndpoints" Diensteanfrage an den betreffenden UA Server UAS weiter, überschreibt (korrigiert) jedoch dessen Diensteantwort:
dabei werden die vom UA Server UAS gemeldeten internen Server gemäß der Endpunkt-Informationen, 111 durch die zugehörigen externen "EndpointURI"s ersetzt.

Wird ein "GetEndpoint" Request von der Verzeichnisdienst-Komponente, Local Discovery Server, LDS, 201 oder Proxy-Komponente UAP, 201 an dem Server durchgeführt, können dessen "EndpointURI" vorab angepasst und gespeichert beziehungsweise gecached werden.

Weiter mit dem Beispiel von oben:
<äußere Verbindungsdaten>:Port/Pfad
<FQDN/Host-IP>:4840/<innere Verbindungsdaten`>/Roboter,
<FQDN/Host-IP>:4840//<innere Verbindungsdaten`>/Camera

Damit sind folgende weitere Ausprägungen möglich:
Die Proxy-Komponente UAP, 200 beantwortet die "GetEndpoints" Diensteanfrage selbst, ohne diese an den UA Server UAS, 101 weiterzuleiten; die bereits aufgebaute Verbindung zum UA Server UAS wird hierbei nicht weiter benutzt. Die Proxy-Komponente UAP antwortet auf der Basis der ihm übermittelten Endpunkt-Informationen, 111 mit den zur Anfrage gehörigen externen "EndpointURI"s des adressierten Dienste- Servers UAS.

Alternativ leitet die Proxy-Komponente UAP, 200 die "GetEndpoints" Diensteanfrage an die Verzeichnisdienst-Komponente, Local Discovery Server LDS, 201 weiter, der sie stellvertretend für die UA Server UAS mit den korrekten externen "EndpointURIs" beantwortet.

Die Proxy-Komponente UAP, 200 greift nicht in die weitere, und später evtl. gesicherte Kommunikation zwischen OPC UA Client UAC, 100 und OPC UA Server UAS, 101 im Rahmen einer "secure session" ein.

Die verschiedenen Teilnehmer im Ökosystem der Industrial Edge wünschen sich eine automatische Integration von OPC UA Server-Apps, egal, von welchem Anbieter. Dabei muss auch der Einsatz aktueller OPC UA Security-Mechanismen, insbesondere der sogenannten "secure sessions", unterstützt werden. Um die "externe" Integration in Automatisierungsapplikationen möglichst einfach auch im Hinblick auf spätere Änderungen zu gestalten, sollten die extern festzulegenden Netzwerkadressierungsinformationen minimal gehalten werden, um Adressierungskonflikte beispielsweise mit anderen Apps zu vermeiden.

Weitere vorteilhafte Effekte ergeben sich daraus.

Durch das vorgeschlagene Verfahren und System erreicht man eine Verbesserung bzw. Vereinfachung des Inbetriebsetzens und der Security von Geräten mit mehreren OPC UA Servern beispielswiese durch Nutzung nur eines einzigen TCP-Ports und damit einhergehende Vereinfachung der in der Kundeninfrastruktur erforderlichen Security-Maßnahmen.

Die Abhängigkeit Server-Konfiguration von OPC UA Apps/Containern wird von der Netzwerkanbindung des Geräts mit den Server-Apps entkoppelt.

OPC UA Clients wird ermöglicht, die beispielsweise auf einer Industrial Edge installierten OPC UA Server-Applikationen korrekt per OPC UA Diensten nicht nur aufzufinden, sondern auch erfolgreich Verbindungen zu diesen aufzubauen.

TCP-Portkonflikte auf Geräten können vermieden werden, beispielsweise bei um den vordefinierten Port 4840 konkurrierenden OPC UA Server-Apps.

Das fehleranfälligen TCP-Port-Managements (inklusive des Security-Konzepts) durch den Anwender wird vermieden, in Kooperation mit den einzelnen OPC UA Server-App-Anbietern - soweit überhaupt möglich.

## Patentansprüche

1. Verfahren zur Bereitstellung von Diensten mittels Ablaufsteuerungskomponenten in einer Ablaufsteuerungsumgebung an einen Dienstabnehmer (UAC, 100), wobei
- den Diensten jeweils zumindest eine Server-Komponente (UAS, 101) zugeordnet ist, die durch eine in die Ablaufsteuerungsumgebung ladbare und dort ausführbare Ablaufsteuerungskomponente gebildet wird,
- zumindest eine Proxy-Komponente (UAP, 200) eines die Ablaufsteuerungsumgebung umfassenden Teilnetzes, Anfragen von einem Dienstabnehmer (UAC, 100) annimmt,
- eine zentrale Verzeichnisdienst-Komponente (LDS) die innerhalb des Teilnetzes gültigen Adressierungsinformationen an die Proxy-Komponente (UAP, 200) übermitteln
- die Server-Komponente (UAS, 101) an der zentralen Verzeichnisdienst-Komponente (LDS) mit seinen inneren Verbindungsdaten (111) bestehend aus den für den der Server-Komponente selbst sichtbaren Netzwerkadressen und -ports, registriert wird, **dadurch gekennzeichnet, dass**
- zu jeweils innerhalb des Teilnetzes gültigen externen Netzwerk-Adressierungsinformationen der Server-Komponente (UAS, 101) zugeordnete global gültige Zugangsinformationen ermittelt werden, und
- die inneren Verbindungsdaten mittels der ermittelten externen Netzwerk-Adressierungsinformationen (102) in der zentralen Verzeichnisdienst-Komponente (LDS) modifiziert werden,
so dass die zumindest eine Proxy-Komponente (UAP, 200) Dienstanfragen entsprechend den modifizierten Adressierungsinformationen an die Server-Komponente (UAS, 101) weiterleitet.

2. Verfahren zur Bereitstellung von Diensten mittels einer Ablaufsteuerungsumgebung, gemäß Patentanspruch 1, **dadurch gekennzeichnet, dass**
die Proxy-Komponente (200) eine Dienstanfrage empfängt und einen darin enthaltenen ersten unverschlüsselten Teil dahingehend prüft, ob der darin adressierte Empfänger die zentrale Verzeichnisdienst-Komponente (LDS, 201) ist,
und die Dienstanfrage an diesen weitergeleitet wird, so dass nachfolgende Dienstanfragen von der zentralen Verzeichnisdienst-Komponente (LDS, 201) beantwortet werden.

3. Verfahren zur Bereitstellung von Diensten mittels einer Ablaufsteuerungsumgebung, gemäß Patentanspruch 2,
**dadurch gekennzeichnet, dass**
die Proxy-Komponente (UAP, 200) die Dienstanfrage mit einem darin ersten enthaltenen unverschlüsselten Teil empfängt und dahingehend prüft, ob der darin adressierte Empfänger einen Dienste-Server (UAS, 101) ist,
und die Adressinformation des entsprechenden inneren Dienste-Server (UAS, 101) ermittelt wird und
- ein Verbindungsaufbau mit den ermittelten Adressinformationen des inneren Server-Komponente (UAS, 101) fortgesetzt wird.

4. Verfahren zur Bereitstellung von Diensten mittels einer Ablaufsteuerungsumgebung, gemäß einem der vorherigen Patentansprüche 2 oder 3, wobei
die Proxy-Komponente (UAP, 200) die Verbindung auf das Übertragen weiterer, ungesicherter Dienstanfragen überwacht.

5. Verfahren zur Bereitstellung von Diensten mittels einer Ablaufsteuerungsumgebung, gemäß Patentanspruch 4, wobei die Proxy-Komponente die Dienstanfrage selbst beantwortet, ohne diese an den Dienste-Server weiterzuleiten.

6. Verfahren zur Bereitstellung von Diensten mittels einer Ablaufsteuerungsumgebung, gemäß Patentanspruch 4, wobei die Proxy-Komponente die Diensteanfrage an die Verzeichnisdienst-Komponente (LDS, 201) weiterleitet, der sie stellvertretend für den adressierten Dienste-Server mit korrekten Adressangaben beantwortet.

7. Verfahren zur Bereitstellung von Diensten mittels einer Ablaufsteuerungsumgebung, gemäß einem der vorherigen Patentansprüche, wobei
der Dienste-Server (UAS, 101) über die Proxy-Komponente (UAP, 200) vorzugsweise über nur einen zuvor festgelegten Port ansprechbar ist.

8. Verfahren zur Bereitstellung von Diensten mittels einer Ablaufsteuerungsumgebung, gemäß einem der vorherigen Patentansprüche, wobei
ein Dienst jeweils eine eigene Verzeichnisdienst-Komponente umfasst und die Registrierung der Server-Komponente (UAS, 101) an der dem Dienst zugeordneten Verzeichnisdienst-Komponente (LDS) mit seinen inneren Verbindungsdaten (111), bestehend aus den für den der Server-Komponente selbst sichtbaren Netzwerkadressen und -ports, erfolgt.

9. Computerprogrammprodukt zur Bereitstellung von Diensten mittels einer Ablaufsteuerungsumgebung, gemäß den Verfahrensschritten eines der vorherigen Patentansprüche.

10. System zur Bereitstellung von Diensten mittels Ablaufsteuerungskomponenten in einer Ablaufsteuerungsumgebung, mit
- jeweils mindestens eine einem Dienst zugeordnete Server-Komponente (UAS, 101), die durch eine in die Ablaufsteuerungsumgebung ladbare und dort ausführbare Ablaufsteuerungskomponente gebildet wird,
- zumindest eine Proxy-Komponente (UAP, 200) eines die Ablaufsteuerungsumgebung umfassenden Teilnetzes, geeignet und eingerichtet zur Annahme von Anfragen von einem Dienstabnehmer (UAC, 100),
- eine zentrale Verzeichnisdienst-Komponente (LDS, 201) geeignet und eingerichtet, die innerhalb des Teilnetzes gültigen externen Netzwerk-Adressierungsinformationen an die Proxy-Komponente (UAP, 200) zu übermitteln, und zur Entgegennahme der Registrierung des Servers (UAS, 101) mit seinen inneren Verbindungsdaten (111), bestehend aus den für den der Server-Komponente selbst sichtbaren Netzwerkadressen und -ports, und Ersetzen der inneren Verbindungsdaten (DiscoveryURI) durch die ermittelten externen Netzwerk-Adressierungsinformationen (102),
- wobei die zumindest eine Proxy-Komponente (UAP, 200) dazu geeignet und eingerichtet ist, Dienstzugriffsanfragen entsprechend den modifizierten Adressierungsinformationen an die Server-Komponenten weiterzuleiten.

11. System zur Bereitstellung von Diensten mittels Ablaufsteuerungskomponenten in einer Ablaufsteuerungsumgebung gemäß Patentanspruch 10, **dadurch gekennzeichnet, dass** die Proxy-Komponente (UAP, 200) als OPC UA Proxy mit Local Discovery Server Funktionalität (LDS, 201) ausgebildet ist.

12. System zur Bereitstellung von Diensten mittels Ablaufsteuerungskomponenten in einer Ablaufsteuerungsumgebung gemäß Patentanspruch 10 oder 11, **dadurch gekennzeichnet, dass**
die Proxy-Komponente (200) geeignet und eingerichtet ist, eine Dienstanfrage zu empfangen und einen darin enthaltenen unverschlüsselten Teil dahingehend zu prüfen, ob der darin adressierte Empfänger die zentrale Verzeichnisdienst-Komponente (LDS, 201) ist,
und die Dienstanfrage an diesen weiterleitet, so dass nachfolgende Dienstanfragen von der zentralen Verzeichnisdienst-Komponente (LDS, 201) beantwortet werden.

13. System zur Bereitstellung von Diensten mittels Ablaufsteuerungskomponenten in einer Ablaufsteuerungsumgebung gemäß einem der Patentansprüche 10 bis 12, **dadurch gekennzeichnet, dass**
die Proxy-Komponente (UAP, 200) dazu geeignet und eingerichtet ist, eine einen darin enthaltenen unverschlüsselten Teil der Dienstanfrage zu empfangen und dahingehend zu prüfen, ob der darin adressierte Empfänger einen Dienste-Server (UAS, 101) ist,
und die Adressinformation des entsprechenden inneren Dienste-Server (UAS, 101) ermittelt wird und
- ein Verbindungsaufbau mit den ermittelten Adressinformationen des inneren Dienste-Servers (UAS, 101) fortgesetzt wird.

14. System zur Bereitstellung von Diensten mittels Ablaufsteuerungskomponenten in einer Ablaufsteuerungsumgebung gemäß einem der Patentansprüche 10 bis 13, **dadurch gekennzeichnet, dass**
die Proxy-Komponente (UAP, 200) dazu geeignet und eingerichtet ist, die Verbindung auf das Übertragen weiterer darin enthaltenen unverschlüsselten Teil einer Diensteanfragen zu überwachen.

15. System zur Bereitstellung von Diensten mittels Ablaufsteuerungskomponenten in einer Ablaufsteuerungsumgebung gemäß Patentanspruch 14, **dadurch gekennzeichnet, dass**
die Proxy-Komponente (UAP, 200) dazu geeignet und eingerichtet ist, die Diensteanfrage selbst zu beantworten, ohne diese an den Dienste-Server weiterzuleiten.

16. System zur Bereitstellung von Diensten mittels Ablaufsteuerungskomponenten in einer Ablaufsteuerungsumgebung gemäß Patentanspruch 14, **dadurch gekennzeichnet, dass**
die Proxy-Komponente (UAP, 200) dazu geeignet und eingerichtet ist, die Dienstanfrage an die Verzeichnisdienst-Komponente (LDS, 201) weiterzuleiten, der sie stellvertretend für den adressierten Dienste-Server mit korrekten Adressangaben beantwortet.

17. System zur Bereitstellung von Diensten mittels Ablaufsteuerungskomponenten in einer Ablaufsteuerungsumgebung gemäß einem der Patentansprüche 10 bis 16, **dadurch gekennzeichnet, dass**
der Dienste-Server (UAS, 101) über die Proxy-Komponente (UAP, 200) vorzugsweise über nur einen zuvor festgelegten Port ansprechbar ist.

## Claims

1. Method for providing services to a service consumer (UAC, 100) by means of sequence control components in a sequence control environment, wherein
- each service is assigned at least one server component (UAS, 101), which is formed by a sequence control component that can be loaded into the sequence control environment and executed there,
- at least one proxy component (UAP, 200) of a subnet comprising the sequence control environment accepts requests from a service consumer (UAC, 100),
- a central directory service component (LDS) transmits the addressing information valid within the subnet to the proxy component (UAP, 200),
- the server component (UAS, 101) is registered on the central directory service component (LDS) with its internal connection data (111) consisting of the network addresses and ports visible to the server component itself, **characterized in that**
- globally valid access information assigned to external network addressing information of the server component (UAS, 101), which is valid within the subnet, is determined, and
- the internal connection data is modified by means of the determined external network addressing information (102) in the central directory service component (LDS),
so that the at least one proxy component (UAP, 200) forwards service requests corresponding to the modified addressing information to the server component (UAS, 101).

2. Method for providing services by means of a sequence control environment, according to Claim 1, **characterized in that** the proxy component (200) receives a service request and checks a first unencrypted part contained therein to determine whether the recipient addressed therein is the central directory service component (LDS, 201),
and that the service request is forwarded to said receiver so that subsequent service requests are answered by the central directory service component (LDS, 201).

3. Method for providing services by means of a sequence control environment, according to Claim 2,
**characterized in that**
the proxy component (UAP, 200) receives the service request with a first unencrypted part contained therein and checks whether the recipient addressed therein is a services server (UAS, 101),
and the address information of the corresponding internal services server (UAS, 101) is determined and
- the establishment of a connection to the determined address information of the internal server component (UAS, 101) is continued.

4. Method for providing services by means of a sequence control environment, according to either of preceding Claims 2 and 3, wherein
the proxy component (UAP, 200) monitors the connection for the transmission of further, unsecured service requests.

5. Method for providing services by means of a sequence control environment, according to Claim 4, wherein
the proxy component itself answers the service request without forwarding it to the services server.

6. Method for providing services by means of a sequence control environment, according to Claim 4, wherein
the proxy component forwards the service request to the directory service component (LDS, 201), which answers it with correct address information on behalf of the addressed services server.

7. Method for providing services by means of a sequence control environment, according to any of the preceding claims, wherein
the services server (UAS, 101) can be addressed via the proxy component (UAP, 200), preferably via only one previously specified port.

8. Method for providing services by means of a sequence control environment, according to any of the preceding claims, wherein
each service comprises its own directory service component and the registration of the server component (UAS, 101) on the directory service component (LDS) assigned to the service takes place with its internal connection data (111), consisting of the network addresses and ports visible to the server component itself.

9. Computer program product for providing services by means of a sequence control environment, according to the method steps of any of the preceding claims.

10. System for providing services by means of sequence control components in a sequence control environment, having
- in each case at least one server component (UAS, 101) assigned to a service, which is formed by a sequence control component that can be loaded into the sequence control environment and executed there,
- at least one proxy component (UAP, 200) of a subnet comprising the sequence control environment, suitable and configured for accepting requests from a service consumer (UAC, 100),
- a central directory service component (LDS, 201) suitable and configured for transmitting the external network addressing information valid within the subnet to the proxy component (UAP, 200), and for accepting the registration of the server (UAS, 101) with its internal connection data (111), consisting of the network addresses and ports visible to the server component itself, and replacing the internal connection data (DiscoveryURI) with the determined external network addressing information (102),
- wherein the at least one proxy component (UAP, 200) is suitable and configured for forwarding service access requests corresponding to the modified addressing information to the server components.

11. System for providing services by means of sequence control components in a sequence control environment according to Claim 10, **characterized in that**
the proxy component (UAP, 200) is designed as an OPC UA proxy with Local Discovery Server functionality (LDS, 201).

12. System for providing services by means of sequence control components in a sequence control environment according to Claim 10 or 11, **characterized in that**
the proxy component (200) is suitable and configured for receiving a service request and checking an unencrypted part contained therein to determine whether the recipient addressed therein is the central directory service component (LDS, 201),
and forwards the service request to said receiver, so that subsequent service requests are answered by the central directory service component (LDS, 201).

13. System for providing services by means of sequence control components in a sequence control environment according to any of Claims 10 to 12, **characterized in that**
the proxy component (UAP, 200) is suitable and configured for receiving an unencrypted part of the service request contained therein and for checking whether the recipient addressed therein is a services server (UAS, 101),
and the address information of the corresponding internal services server (UAS, 101) is determined and
- the establishment of a connection to the determined address information of the internal services server (UAS, 101) is continued.

14. System for providing services by means of sequence control components in a sequence control environment according to any of Claims 10 to 13, **characterized in that**
the proxy component (UAP, 200) is suitable and configured for monitoring the connection for the transmission of further unencrypted parts of a service request contained therein.

15. System for providing services by means of sequence control components in a sequence control environment according to Claim 14, **characterized in that**
the proxy component (UAP, 200) is suitable and configured for answering the service request itself without forwarding it to the services server.

16. System for providing services by means of sequence control components in a sequence control environment according to Claim 14, **characterized in that**
the proxy component (UAP, 200) is suitable and configured for forwarding the service request to the directory service component (LDS, 201), which answers it with correct address information on behalf of the addressed services server.

17. System for providing services by means of sequence control components in a sequence control environment according to any of Claims 10 to 16, **characterized in that**
the services server (UAS, 101) can be addressed via the proxy component (UAP, 200), preferably via only one previously specified port.

## Revendications

1. Procédé de fourniture de services au moyen de composantes de commandes de déroulement dans un environnement de commandes de déroulement sur un receveur de services (UAC, 100), dans lequel
- au moins une composante de serveur (UAS, 101) respective est attribuée aux services, qui est composée par une composante de commandes de déroulement pouvant être chargée dans l'environnement de commandes de déroulement et y être exécutée,
- au moins une composante de proxy (UAP, 200) d'un réseau partiel englobant l'environnement de commandes de déroulement, reçoit des requêtes d'un receveur de services (UAC, 100),
- une composante de service de répertoire central (LDS) qui transmet à la composante de proxy (UAP, 200) des informations d'adressage externes valables au sein du réseau partiel,
- la composante de serveur (UAS, 101) est enregistrée sur la composante de service de répertoire central (LDS) avec ses données de connexion internes (111) composées des adresses et ports de réseau visibles par la composante de serveur elle-même,
**caractérisé en ce que**
- des informations d'accès valables globalement attribuées respectivement à des informations d'adressage de réseau externes de la composante de service (UAS, 101) valables au sein du réseau partiel sont déterminées, et
- les données de connexion internes sont modifiées au moyen des informations d'adressage de réseau externes (102) dans la composante de service de répertoire central (LDS),
de façon à ce que l'au moins une composante de proxy (UAP, 200) transmette à la composante de serveur (UAS, 101) des requêtes de service conformément aux informations d'adressage modifiées.

2. Procédé de fourniture de services au moyen d'un environnement de commandes de déroulement, selon la revendication 1, **caractérisé en ce que**
la composante de proxy (200) reçoit une requête de service et vérifie à cet effet une première partie non cryptée contenue dedans pour savoir si le récepteur adressé dedans est la composante de service de répertoire central (LDS, 201),
et la requête de service est transmise à celui-ci de façon à ce que la composante de service de répertoire central (LDS, 201) puisse répondre à des requêtes de services suivantes.

3. Procédé de fourniture de services au moyen d'un environnement de commandes de déroulement, selon la revendication 2, **caractérisé en ce que**
la composante de proxy (UAP, 200) reçoit la requête de service avec une première partie non cryptée contenue dedans et vérifie à cet effet si le récepteur adressé dedans est un serveur de services (UAS, 101),
et l'information d'adressage du serveur de services interne (UAS, 101) correspondant est déterminée et
- un établissement de connexion avec les informations d'adressage déterminées de la composante de serveur interne (UAS, 101) est poursuivi.

4. Procédé de fourniture de services au moyen d'un environnement de commandes de déroulement, selon l'une des revendications précédentes 2 ou 3, dans lequel
la composante de proxy (UAP, 200) surveille la connexion à la transmission d'autres requêtes de services non sécurisées.

5. Procédé de fourniture de services au moyen d'un environnement de commandes de déroulement, selon la revendication 4, dans lequel
la composante de proxy répond elle-même à la requête de service sans transmettre celle-ci au serveur de services.

6. Procédé de fourniture de services au moyen d'un environnement de commandes de déroulement, selon la revendication 4, dans lequel
la composante de proxy transmet la requête de service à la composante de service de répertoire central (LDS, 201) à laquelle elle répond à la place du serveur de services adressé avec les informations d'adressage correctes.

7. Procédé de fourniture de services au moyen d'un environnement de commandes de déroulement, selon l'une des revendications précédentes, dans lequel
le serveur de services (UAS, 101) peut être contacté par la composante de proxy (UAP, 200) de préférence par un seul port défini préalablement.

8. Procédé de fourniture de services au moyen d'un environnement de commandes de déroulement, selon l'une des revendications précédentes, dans lequel
un service comprend respectivement sa propre composante de service de répertoire et l'enregistrement de la composante de serveur (UAS, 101) sur la composante de service de répertoire (LDS) attribuée au service se fait avec ses données de connexion internes (111) composées des adresses et ports de réseau visibles par la composante de serveur elle-même.

9. Produit de programme informatique de fourniture de services au moyen d'un environnement de commandes de déroulement, selon le procédé d'une des revendications précédentes.

10. Système de fourniture de services au moyen de composantes de commandes de déroulement dans un environnement de commandes de déroulement comprenant
- au moins une composante de serveur (UAS, 101) respective attribuée à un service, qui est composée par une composante de commandes de déroulement pouvant être chargée dans l'environnement de commandes de déroulement et y être exécutée,
- au moins une composante de proxy (UAP, 200) d'un réseau partiel englobant l'environnement de commandes de déroulement, appropriée et configurée pour recevoir des requêtes d'un receveur de services (UAC, 100),
- une composante de service de répertoire central (LDS, 201) appropriée et configurée pour transmettre à la composante de proxy (UAP, 200) des informations d'adressage externes valables au sein du réseau partiel, et pour réceptionner l'enregistrement du serveur (UAS, 101) avec ses données de connexion internes (111), composées des adresses et ports de réseau visibles par la composante de serveur elle-même, et remplacer les données de connexion internes (DiscoveryURI) par les informations d'adressage de réseau externes (102) déterminées,
dans lequel l'au moins une composante de proxy (UAP, 200) est appropriée et configurée pour transmettre des requêtes d'accès au service aux composantes de serveur conformément aux informations d'adressage modifiées.

11. Système de fourniture de services au moyen de composantes de commandes de déroulement dans un environnement de commandes de déroulement selon la revendication 10, **caractérisé en ce que** la composante de proxy (UAP, 200) est conçue en tant que OPC UA Proxy avec fonctionnalité de Local Discovery Server (LDS, 201).

12. Système de fourniture de services au moyen de composantes de commandes de déroulement dans un environnement de commandes de déroulement selon la revendication 10 ou 11, **caractérisé en ce que**
la composante de proxy (200) est appropriée et configurée pour recevoir une requête de service et pour vérifier à cet effet une première partie non cryptée contenue dedans pour savoir si le récepteur adressé dedans est la composante de service de répertoire central (LDS, 201),
et la requête de service est transmise à celui-ci de façon à ce que la composante de service de répertoire central (LDS, 201) puisse répondre à des requêtes de services suivantes.

13. Système de fourniture de services au moyen de composantes de commandes de déroulement dans un environnement de commandes de déroulement selon l'une des revendications 10 à 12, **caractérisé en ce que**
la composante de proxy (UAP, 200) est appropriée et configurée pour recevoir une partie non cryptée contenue dedans de la requête de service et vérifier à cet effet si le récepteur adressé dedans est un serveur de services (UAS, 101),
et l'information d'adressage du serveur de services interne (UAS, 101) correspondant est déterminée et
- un établissement de connexion avec les informations d'adressage déterminées de la composante de serveur interne (UAS, 101) est poursuivi.

14. Système de fourniture de services au moyen de composantes de commandes de déroulement dans un environnement de commandes de déroulement selon l'une des revendications 10 à 13, **caractérisé en ce que**
la composante de proxy (UAP, 200) est appropriée et configurée pour surveiller la liaison à la transmission d'une autre partie non cryptée contenue dedans d'une requête de service.

15. Système de fourniture de services au moyen de composantes de commandes de déroulement dans un environnement de commandes de déroulement selon la revendication 14, **caractérisé en ce que**
la composante de proxy (UAP, 200) est appropriée et configurée pour répondre elle-même à la requête de service sans transmettre celle-ci au serveur de services.

16. Système de fourniture de services au moyen de composantes de commandes de déroulement dans un environnement de commandes de déroulement selon la revendication 14, **caractérisé en ce que**
la composante de proxy (UAP, 200) est appropriée et configurée pour transmettre la requête de service à la composante de service de répertoire (LDS, 201) à laquelle elle répond à la place du serveur de services adressé avec les informations d'adressage correctes.

17. Système de fourniture de services au moyen de composantes de commandes de déroulement dans un environnement de commandes de déroulement selon l'une des revendications 10 à 16, **caractérisé en ce que**
le serveur de services (UAS, 101) peut être contacté par la composante de proxy (UAP, 200) de préférence par un seul port défini préalablement.
